# EUROPEAN PATENT APPLICATION

(11) **EP 4 134 271 A1**
(43) Date of publication of application: **15.02.2023**
(21) Application number: 20933281.6
(22) Date of filing: 30.04.2020
(51) Int. Cl.: B60N 2/00, B60R 16/037, B60N 2/02

(54) **SEAT ADJUSTMENT METHOD, DEVICE AND SYSTEM**

(71) Applicant: Huawei Technologies Co., Ltd., Shenzhen, Guangdong 518129 (CN)
(72) Inventor: JIN, Zhou, Shenzhen, Guangdong 518129 (CN); ZHANG, Rong, Shenzhen, Guangdong 518129 (CN)
(74) Representative: Pfenning, Meinig & Partner mbB
(86) International application number: PCT/CN2020/088516
(87) International publication number: WO 2021/217665

(57) **Abstract**

A seat adjustment method, apparatus, and system are disclosed. The method includes: obtaining user information and status information corresponding to a user; determining, based on the user information and the status information, a seat parameter corresponding to the user; and adjusting a seat based on the seat parameter corresponding to the user. The seat adjustment method can meet differentiated user requirements, avoid seat adjustment based on a fixed parameter preset by a manufacturer in advance, and provide a more flexible seat adjustment manner for the user, thereby better improving user experience.

## Description

### TECHNICAL FIELD

This application relates to the field of automotive technologies, and in particular, to a seat adjustment method, apparatus, and system.

### BACKGROUND

With rapid popularization of automobiles, competition in the automobile industry is becoming fiercer. To increase sales volume of automobiles, the key is improving user experience in using vehicles.

Currently, to improve comfort experience of a user in using a seat, a parameter of the seat is usually adjusted to a preset parameter. This prevents the user from manually adjusting the seat, and frees hands of the user. Generally, the preset parameter is a fixed parameter preset by a manufacturer in advance. However, such seat adjustment manner is relatively rigid, inflexible, and cannot meet differentiated user requirements.

### SUMMARY

Embodiments of this application provide a seat adjustment method, apparatus, and system, to meet differentiated user requirements, avoid seat adjustment based on a fixed parameter preset by a manufacturer in advance, and provide a more flexible seat adjustment manner for a user, thereby better improving user experience.

According to a first aspect, a seat adjustment method is provided. The method includes: obtaining user information and status information corresponding to a user; determining, based on the user information and the status information, a seat parameter corresponding to the user; and adjusting a seat based on the seat parameter corresponding to the user.

It can be learned that in the foregoing technical solution, the corresponding seat parameter is configured for the user based on the user information and the status information corresponding to the user. This meets differentiated user requirements, avoids seat adjustment based on a fixed parameter preset by a manufacturer in advance, and provides a more flexible seat adjustment manner for the user, thereby better improving user experience.

Optionally, in a possible implementation, the obtaining user information corresponding to a user includes: identifying identity information of the user by using a camera, or identifying the identity information entered by the user; and obtaining the user information based on the identity information.

It can be learned that in the foregoing technical solution, the user information is obtained.

Optionally, in a possible implementation, the status information includes at least one of the following: environment information, time information, or geographical location information, and the environment information includes environment information inside a vehicle and/or environment information outside the vehicle.

It can be learned that in the foregoing technical solution, with reference to the status information, a requirement of the user is controlled more accurately, so that the seat parameter that meets the requirement of the user can be better provided for the user.

Optionally, in a possible implementation, the determining, based on the user information and the status information, a seat parameter corresponding to the user includes: sending the user information and the status information to a cloud server; and receiving the seat parameter corresponding to the user and sent by the cloud server; or obtaining N pieces of historical data based on the user information and the status information, where N is an integer greater than 0; and determining, based on the N pieces of historical data, the seat parameter corresponding to the user.

It can be learned that in the foregoing technical solution, the cloud server determines the seat parameter based on the user information and the status information. The historical data is determined based on the user information and the status information, and therefore the seat parameter is determined based on the historical data.

Optionally, in a possible implementation, the obtaining N pieces of historical data based on the user information and the status information includes: sending the user information and the status information to the cloud server; and receiving the N pieces of historical data sent by the cloud server.

It can be learned that in the foregoing technical solution, the cloud server determines the historical data based on the user information and the status information. This prepares for subsequently determining the seat parameter based on the historical data.

Optionally, in a possible implementation, the obtaining N pieces of historical data based on the user information and the status information includes: obtaining, from a database based on the user information, historical data belonging to different categories, where the historical data includes historical status information, and the categories are determined based on a similarity between the historical status information; and determining, from the historical data based on the status information, the N pieces of historical data belonging to a same category.

It can be learned that in the foregoing technical solution, the historical data belonging to the different categories is obtained based on the user information. In addition, because the categories are determined based on the similarity between the historical status information included in the historical data, the N pieces of historical data belonging to the same category are determined from the historical data corresponding to the user based on the status information of the user, that is, historical data corresponding to a similar historical status of the user is determined based on the status information of the user.

Optionally, in a possible implementation, each of the N pieces of historical data includes a historical score and a historical seat parameter, and the determining, based on the N pieces of historical data, the seat parameter corresponding to the user includes: obtaining M pieces of historical data from the N pieces of historical data based on a preset condition, where the preset condition includes one of the following: scores are the highest, the scores are higher than a threshold, or the scores are in descending order, and M is an integer greater than 0 and less than N; and determining, based on M historical seat parameters corresponding to the M pieces of historical data, the seat parameter corresponding to the user.

It can be learned that in the foregoing technical solution, the seat parameter corresponding to the user is determined based on the score, and a requirement of the user can be better controlled, so that the seat parameter that meets the requirement of the user can be provided for the user.

Optionally, in a possible implementation, each of the N pieces of historical data further includes historical status information, the historical status information includes historical time information, and before the obtaining the M pieces of historical data from the N pieces of historical data based on a preset condition, the method further includes:
determining, based on a difference between the historical time information corresponding to each of the N pieces of historical data and the time information, N weights corresponding to the N pieces of historical data, where a smaller difference indicates a larger weight; determining N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and updating the N scoring coefficients to the N historical scores, where the N scoring coefficients are in a one-to-one correspondence with the N historical scores.

It can be learned that in the foregoing technical solution, a different weight is assigned to each historical score by using the difference between the historical time information and the time information, and different scoring coefficients are determined based on the weights and the historical scores. This implements selection of historical data based on the scoring coefficients, and avoids a case in which a recommended seat parameter cannot meet a user requirement when a seat parameter preferred by the user changes within a relatively long time span.

According to a second aspect, a seat adjustment apparatus is provided. The seat adjustment apparatus includes: a transceiver module, configured to obtain user information and status information corresponding to a user; and a processing module, configured to determine, based on the user information and the status information, a seat parameter corresponding to the user. The processing module is further configured to adjust a seat based on the seat parameter corresponding to the user.

In a possible implementation, when obtaining the user information corresponding to the user, the processing module is configured to: identify identity information of the user by using a camera, or identify the identity information entered by the user; and obtain the user information based on the identity information.

In a possible implementation, the status information includes at least one of the following: environment information, time information, or geographical location information, and the environment information includes environment information inside a vehicle and/or environment information outside the vehicle.

In a possible implementation, when determining, based on the user information and the status information, the seat parameter corresponding to the user, the transceiver module is configured to send the user information and the status information to a cloud server, and receive the seat parameter corresponding to the user and sent by the cloud server; or the processing module is configured to: obtain N pieces of historical data based on the user information and the status information, where N is an integer greater than 0; and determine, based on the N pieces of historical data, the seat parameter corresponding to the user.

In a possible implementation, that the N pieces of historical data are obtained based on the user information and the status information includes: The transceiver module is configured to send the user information and the status information to the cloud server; and receive the N pieces of historical data sent by the cloud server.

In a possible implementation, when obtaining the N pieces of historical data based on the user information and the status information, the processing module is specifically configured to: obtain, from a database based on the user information, historical data belonging to different categories, where the historical data includes historical status information, and the categories are determined based on a similarity between the historical status information; and determine, from the historical data based on the status information, the N pieces of historical data belonging to a same category.

In a possible implementation, each of the N pieces of historical data includes a historical score and a historical seat parameter, and when determining, based on the N pieces of historical data, the seat parameter corresponding to the user, the processing module is specifically configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

In a possible implementation, each of the N pieces of historical data further includes historical status information, and the historical status information includes historical time information. Before obtaining the M pieces of historical data from the N pieces of historical data based on the preset condition, the processing module is specifically configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

According to a third aspect, a seat adjustment system is provided, where the system includes a processor, a memory, and a seat adjustment apparatus, where the processor is configured to: obtain, from the memory, user information and status information corresponding to a user; and determine, based on the user information and the status information, a seat parameter corresponding to the user; and the seat adjustment apparatus is configured to adjust a seat based on the seat parameter corresponding to the user.

In a possible implementation, the system further includes an identity identifying apparatus. When obtaining, from the memory, the user information and the status information corresponding to the user, the identity identifying apparatus is configured to identify identity information of the user by using a camera, or identify the identity information entered by the user; and the processor is configured to obtain the user information based on the identity information.

In a possible implementation, the status information includes at least one of the following: environment information, time information, or geographical location information, and the environment information includes environment information inside a vehicle and/or environment information outside the vehicle.

In a possible implementation, the system further includes a communication apparatus, and when determining, based on the user information and the status information, the seat parameter corresponding to the user,
the processor is configured to send the user information and the status information to a cloud server by using the communication apparatus; and receive, by using the communication apparatus, the seat parameter corresponding to the user and sent by the cloud server; or
the processor is configured to: obtain N pieces of historical data from the memory based on the user information and the status information, where N is an integer greater than 0; and determine, based on the N pieces of historical data, the seat parameter corresponding to the user.

In a possible implementation, when obtaining the N pieces of historical data based on the user information and the status information,
the processor is configured to: send the user information and the status information to the cloud server by using the communication apparatus; and receive the N pieces of historical data sent by the cloud server.

In a possible implementation, when obtaining the N pieces of historical data based on the user information and the status information,
the processor is configured to: obtain, from the memory based on the user information, historical data belonging to different categories, where the historical data includes historical status information, and the categories are determined based on a similarity between the historical status information; and determine, from the historical data based on the status information, the N pieces of historical data belonging to a same category.

In a possible implementation, each of the N pieces of historical data includes a historical score and a historical seat parameter, and when determining, based on the N pieces of historical data, the seat parameter corresponding to the user,
the processor is configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

In a possible implementation, each of the N pieces of historical data further includes historical status information, and the historical status information includes historical time information. Before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

According to a fourth aspect, a seat adjustment system is provided. The system includes a vehicle, and the vehicle includes a processor, a memory, a communication apparatus, and a seat adjustment apparatus, where
the processor is configured to: obtain, from the memory, user information and status information corresponding to a user; and determine, based on the user information and the status information, a seat parameter corresponding to the user; and
the seat adjustment apparatus is configured to adjust a seat based on the seat parameter corresponding to the user.

In a possible implementation, the vehicle further includes an identity identifying apparatus, and when obtaining, from the memory, the user information and the status information corresponding to the user,
the identity identifying apparatus is configured to identify identity information of the user by using a camera, or identify the identity information entered by the user; and
the processor is configured to obtain the user information based on the identity information.

In a possible implementation, the status information includes at least one of the following: environment information, time information, or geographical location information, and the environment information includes environment information inside the vehicle and/or environment information outside the vehicle.

In a possible implementation, the system further includes a cloud server, and the vehicle further includes a communication apparatus. When determining, based on the user information and the status information, the seat parameter corresponding to the user,
the processor is configured to send the user information and the status information to the cloud server by using the communication apparatus; and the cloud server is configured to: determine, based on the user information and the status information, the seat parameter corresponding to the user; and send the seat parameter corresponding to the user to the communication apparatus; or
the processor is configured to: obtain N pieces of historical data from the memory based on the user information and the status information, where N is an integer greater than 0; and determine, based on the N pieces of historical data, the seat parameter corresponding to the user.

In a possible implementation, when obtaining the N pieces of historical data based on the user information and the status information,
the cloud server is configured to receive the user information and the status information that are sent by the communication apparatus; and
the processor is configured to receive, by using the communication apparatus, the N pieces of historical data sent by the cloud server.

In a possible implementation, when obtaining the N pieces of historical data based on the user information and the status information,
the processor is configured to: obtain, from the memory based on the user information, historical data belonging to different categories, where the historical data includes historical status information, and the categories are determined based on a similarity between the historical status information; and determine, from the historical data based on the status information, the N pieces of historical data belonging to a same category.

In a possible implementation, each of the N pieces of historical data includes a historical score and a historical seat parameter, and when determining, based on the N pieces of historical data, the seat parameter corresponding to the user,
the processor is configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

In a possible implementation, each of the N pieces of historical data further includes historical status information, and the historical status information includes historical time information. Before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

According to a fifth aspect, an electronic apparatus is provided. The electronic apparatus includes a processor and a memory, where the processor is connected to the memory, the memory is configured to store a computer program, and the processor is configured to execute the computer program stored in the memory, to enable the device to perform the method according to the first aspect or any items of the first aspect.

According to a sixth aspect, a vehicle-mounted device is provided. The vehicle-mounted device includes the electronic apparatus according to the fifth aspect.

According to a seventh aspect, a computer-readable storage medium is provided. The computer-readable storage medium stores a computer program, and when the computer program is executed, the method according to the first aspect or any items of the first aspect is implemented.

According to an eighth aspect, a computer program product is provided. The computer program product includes computer instructions. When the computer instructions are run on the electronic apparatus according to the fifth aspect, the electronic apparatus is enabled to perform the method according to the first aspect or any items of the first aspect.

### BRIEF DESCRIPTION OF DRAWINGS

To describe the technical solutions in embodiments of this application or the prior art more clearly, the following briefly describes the accompanying drawings for describing embodiments or the conventional technology. It is clear that the accompanying drawings in the following description show some embodiments of this application, and a person of ordinary skill in the art may still derive other drawings from these accompanying drawings without creative efforts.
FIG. 1 is a schematic diagram of an architecture of a seat adjustment system according to an embodiment of this application;
FIG. 2 is a schematic diagram of a seat according to an embodiment of this application;
FIG. 3 is a schematic flowchart of a seat adjustment method according to an embodiment of this application;
FIG. 4 is a schematic diagram of a structure of a seat adjustment apparatus according to an embodiment of this application; and
FIG. 5 is a schematic diagram of a structure of an electronic apparatus according to an embodiment of this application.

### DESCRIPTION OF EMBODIMENTS

The following describes the technical solutions in embodiments of this application with reference to the accompanying drawings in embodiments of this application.

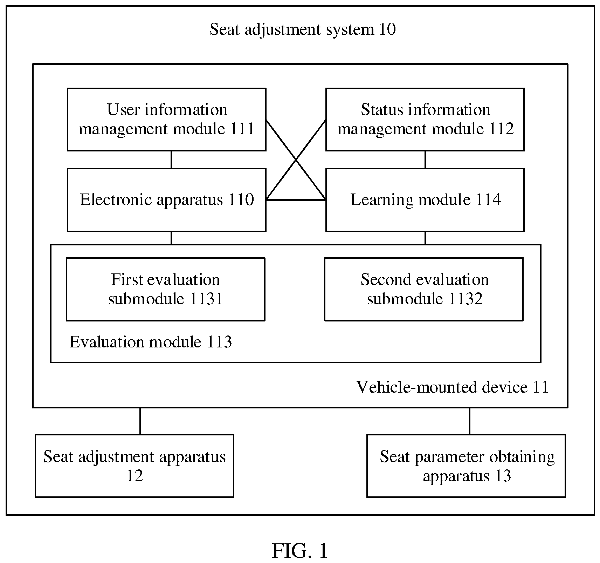

First, FIG. 1 is a schematic diagram of an architecture of a seat adjustment system according to an embodiment of this application. As shown in FIG. 1, the seat adjustment system 10 includes a vehicle-mounted device 11, a seat adjustment apparatus 12, and a seat parameter obtaining apparatus 13. The vehicle-mounted device 11 includes an electronic apparatus 110, a user information management module 111, a status information management module 112, an evaluation module 113, and a learning module 114. The electronic apparatus 110 may communicate with the user information management module 111, the status information management module 112, the evaluation module 113, and the learning module 114. The learning module 114 may communicate with the user information management module 111, the status information management module 112, and the evaluation module 113. In addition, the electronic apparatus 110 may be, for example, a chip.

The user information management module 111 is configured to: process user information, for example, identify and verify user information of a user; and transmit the user information to the electronic apparatus 110 or the learning module 114 after the verification succeeds. For example, the user information of the user may be identified and verified by using biological information such as a fingerprint, a palmprint, and an iris, or the user information of the user may be identified and verified by using a vehicle key, a login interface, or the like. A specific manner in which the user information is identified and verified is not limited in this application. Similarly, a component, a module, or the like used to identify and verify the user information is not limited in this application. For example, when the user information of the user is identified and verified by using an iris, a camera may be required; or when the user information of the user is identified and verified by using a fingerprint, a corresponding sensor may be required.

The status information management module 112 is configured to: process status information, for example, obtain the status information when the user enters a first state or is in the first state; and transmit the status information to the electronic apparatus 110 or the learning module 114. The first state may be, for example, a rest state or a driving state. In addition, it may be detected, through interface interaction, a voice, or the like, that the user enters the first state or the user exits the first state, for example, an instruction for entering the first state by the user or an instruction for exiting the first state by the user. This is not limited herein in this application. It should be noted that the status information management module 112 may communicate with at least one sensor, to obtain the status information. For example, the status information includes environment information. When the environment information is in-vehicle temperature information, the status information management module 112 may obtain the in-vehicle temperature information from a temperature sensor.

The evaluation module 113 includes a first evaluation submodule 1131 and a second evaluation submodule 1132. The first evaluation submodule 1131 is configured to perform scoring based on an evaluation parameter obtained when the user is in the first state, to obtain a first score. For example, the evaluation parameter may include duration, a quantity of posture change times, and a physiological parameter. The duration is a time length when a seat parameter of a seat used by the user is a first seat parameter, the quantity of posture change times is a quantity of posture change times of the user within the duration, and the physiological parameter is a physiological parameter when the seat parameter of the seat used by the user is the first seat parameter. It may be understood that the physiological parameter may include, for example, a heartbeat statistical value, a heart rate variability, a breathing statistical value, a body temperature statistical value, and a quantity of blinking times. Further, a component, a module, or the like used to obtain the evaluation parameter is not limited in this application either. For example, the duration may be obtained by using a timer. The quantity of posture change times may be obtained through calculation by using an acceleration sensor of a wearable device, or the quantity of posture change times may be obtained through visual signal analysis. The heartbeat statistical value or heart rate variability may be obtained through a heart rate sensor of the wearable device, or the heartbeat statistical value may be obtained through a visual signal. The breathing statistical value is obtained through a sound sensor, or the breathing statistical value, the quantity of blinking times, or the like is obtained through the visual signal analysis. The body temperature statistical value may be obtained by using the wearable device. The second evaluation submodule 1132 is configured to obtain a second score when the user exits the first state. For example, the second score may be obtained through interface interaction, the second score may be obtained through voice query, or the second score may be obtained in a manner of sending a message to a mobile phone. A specific manner of obtaining the second score is not limited in this application. When obtaining the first score and the second score, the evaluation module 113 may use the first score and the second score as scores corresponding to the user, may use an average value of the first score and the second score as a score corresponding to the user, may use a higher score in the first score and the second score as a score corresponding to the user, or may use a weighted score as a score corresponding to the user after weighting the first score and the second score based on a preset weighting formula. This is not limited herein. Finally, the score is transmitted to the electronic apparatus 110 or the learning module 114. It should be noted that, if the user does not feed back the second score, the second evaluation submodule 1132 may determine the second score as an invalid score. That is, when obtaining the first score, the evaluation module 113 may use the first score as the score corresponding to the user, and transmit the score to the electronic apparatus 110 or the learning module 114.

The learning module 114 is configured to process the user information, the status information, and the score. Specifically, the learning module 114 may perform model training by using the user information, the status information, and the score. For example, a clustering model may be trained by using the user information, the status information, and the score. When model training ends, a trained clustering model may be used to obtain a historical seat parameter and the like based on the user information and the status information.

The seat adjustment apparatus 12 is configured to adjust a seat based on the seat parameter transmitted by the vehicle-mounted device 11 or the electronic apparatus 110. The seat parameter obtaining apparatus 13 is configured to feed back a changed seat parameter when detecting that the seat parameter changes when the user is in the first state. It may be understood that the seat parameter obtaining apparatus may be a plurality of sensors.

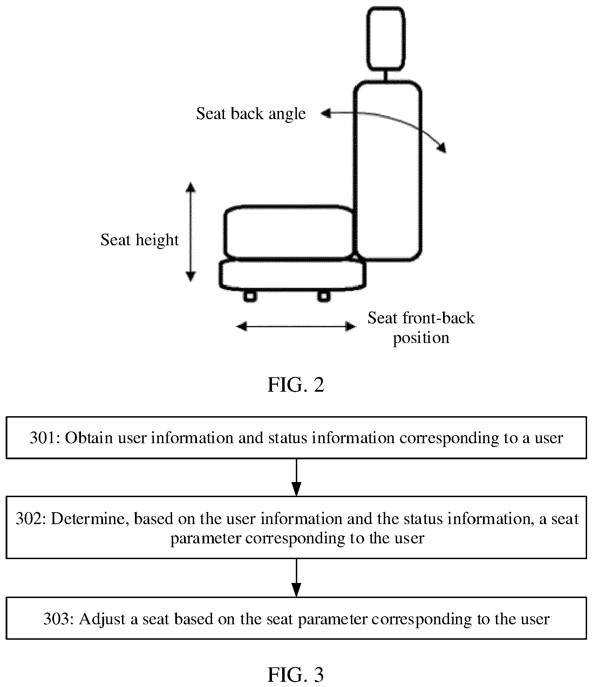

FIG. 2 is a schematic diagram of a seat according to an embodiment of this application. As shown in FIG. 2, it can be seen that, generally, when the seat is adjusted, the adjustment is mainly related to a seat back angle, a seat height, a seat front-back position, and the like. Certainly, the adjustment can also be related to a temperature of the seat. Which parameters of the seat may be specifically adjusted is not limited in this application.

It may be understood that, currently, to improve comfort experience of the user in using the seat, a parameter of the seat is usually adjusted to a preset parameter. This prevents the user from manually adjusting the seat, and frees hands of the user. Generally, the preset parameter is a fixed parameter preset by a manufacturer in advance. For example, the manufacturer may set a fixed seat back angle in advance, or may set a fixed seat height in advance. However, such seat adjustment manner is relatively rigid, inflexible, and cannot meet differentiated user requirements.

Based on this, this application provides a seat adjustment method, to resolve the foregoing technical problem. The following describes embodiments of this application in detail.

The seat adjustment method provided in embodiments of this application may be applied to a vehicle-mounted device. The vehicle-mounted device may be an electronic apparatus, or may be a device including the electronic apparatus. The following uses an example in which the vehicle-mounted device is an electronic apparatus. FIG. 3 is a schematic flowchart of a seat adjustment method according to an embodiment of this application. As shown in FIG. 3, the method includes the following steps.

301: The electronic apparatus obtains user information and status information corresponding to a user.

Before step 301, the electronic apparatus may receive an instruction of entering a first state by the user. When the electronic apparatus receives the instruction of entering the first state by the user, the electronic apparatus may obtain, by using a user information management module, the user information corresponding to the user. Specifically, the electronic apparatus may identify identity information of the user by using a camera, or identify the identity information entered by the user. Then, the electronic apparatus may obtain the user information based on the identity information.

The identity information of the user is identified by using the camera, and the identity information may be, for example, an image including the user or a video including the user, for example, a face image of the user or an iris image of the user. The identity information entered by the user is identified, where the identity information may be, for example, a login account and a login password.

It can be learned that in the foregoing technical solution, the user information is obtained.

Further, the electronic apparatus may further obtain, by using a status information management module, the status information corresponding to the user.

The status information includes at least one of the following: environment information, time information, or geographical location information, and the environment information includes environment information inside a vehicle and/or environment information outside the vehicle.

For example, the environment information inside the vehicle may include a quantity of persons inside the vehicle, a location at which each person sits, decibel information inside the vehicle, and temperature information inside the vehicle. The environment information outside the vehicle may include, for example, temperature information outside the vehicle and brightness information outside the vehicle. The time information may be, for example, timestamp information, season label information, or time label information at a current moment. For example, the season label information may include four labels: "spring", "summer", "autumn", and "winter", the time label information may include four labels: "morning", "afternoon", "evening", and "early morning", and the time label information may further include two labels: "workday" and "weekend". The geographical location information may include, for example, an indoor parking lot, an outdoor parking lot, a home, a company, a service area, an outdoor park, or a mountainous area.

It can be learned that in the foregoing technical solution, with reference to the status information, a requirement of the user is controlled more accurately, so that a seat parameter that meets the requirement of the user can be better provided for the user.

In addition, if the electronic apparatus receives, for the first time, the instruction of entering the first state by the user, the electronic apparatus may also obtain, by using the user information management module, the user information corresponding to the user, or may obtain, by using the status information management module, the status information corresponding to the user. Because the electronic apparatus receives, for the first time, the instruction of entering the state by the user, it indicates that there is no historical data corresponding to the user. Therefore, the electronic apparatus cannot obtain the historical data based on the user information and the status information. In this case, the electronic apparatus may obtain a preset seat parameter, and adjust a seat based on the preset seat parameter, that is, the electronic apparatus adjusts the seat based on the preset seat parameter by using a seat adjustment apparatus. It may be understood that the preset seat parameter may include, for example, a seat back angle, a seat height, a seat front-back position, and a seat temperature. For example, the seat back angle is Ro degrees, the seat height is Ho centimeters away from an origin, the seat front-back position are L₀ centimeters away from the origin, and the seat temperature is To degrees Celsius.

302: The electronic apparatus determines, based on the user information and the status information, a seat parameter corresponding to the user.

Optionally, in a possible implementation, when the seat parameter corresponding to the user is determined based on the user information and the status information, the electronic apparatus may send the user information and the status information to a cloud server. When the cloud server receives the user information and the status information, the cloud server determines the seat parameter corresponding to the user based on the user information and the status information, and sends the seat parameter corresponding to the user to the electronic apparatus.

The seat parameter corresponding to the user may include, for example, a seat back angle, a seat height, a seat front-back position, and a seat temperature.

In addition, the electronic apparatus may also obtain N pieces of historical data based on the user information and the status information, and determine, based on the N pieces of historical data, the seat parameter corresponding to the user.

N is an integer greater than 0, and N may be, for example, a value such as 1, 2, 3, 4, 5, 6, 10, or 12.

It may be understood that each of the N pieces of historical data also includes historical status information, a historical score, and a historical seat parameter. The historical status information includes at least one of the following: historical environment information, historical time information, or historical geographical location information, and the historical environment information includes historical environment information inside the vehicle and/or historical environment information outside the vehicle. Further, for the historical status information, refer to the status information in step 301 in FIG. 3. Details are not described herein again. In addition, each of the N pieces of historical data is data associated with one historical sample point.

It can be learned that in the foregoing technical solution, the cloud server determines the seat parameter based on the user information and the status information. The historical data is determined based on the user information and the status information, and therefore the seat parameter is determined based on the historical data.

Further, when obtaining the N pieces of historical data based on the user information and the status information, the electronic apparatus may send the user information and the status information to the cloud server. When the cloud server receives the user information and the status information, the cloud server may obtain the N pieces of historical data based on the user information and the status information, and send the N pieces of historical data to the electronic apparatus.

It can be learned that in the foregoing technical solution, the cloud server determines the historical data based on the user information and the status information. This prepares for subsequently determining the seat parameter based on the historical data.

In addition, when obtaining the N pieces of historical data based on the user information and the status information, the electronic apparatus may obtain, from a database based on the user information, historical data belonging to different categories, where the historical data includes historical status information, and the categories are determined based on a similarity between the historical status information. Further, the electronic apparatus may further determine, from the historical data based on the status information, the N pieces of historical data belonging to a same category.

It may be understood that, before the electronic apparatus obtains, from the database based on the user information, the historical data belonging to the different categories, each time when the electronic apparatus receives the instruction of entering the first state by the user, the electronic apparatus may obtain, by using the user information management module, the user information corresponding to the user, or may obtain, by using the status information management module, the status information corresponding to the user.

Further, each time before the electronic apparatus receives an instruction of exiting the first state by the user, if the seat parameter obtaining apparatus does not detect that the seat parameter changes, that is, the seat parameter obtaining apparatus does not feed back a changed seat parameter to the electronic apparatus, each time when the electronic apparatus receives the instruction of exiting the first state by the user, the electronic apparatus may obtain a score K1 by using an evaluation module. Specifically, when the user has fed back a second score K1, the score K1 may be a sum of a first score K1 and the second score K1, may be an average of the first score K1 and the second score K1, may be a higher score in the first score K1 and the second score K1, or may be a score obtained through weighting of the first score K1 and the second score K1 based on a preset weighting formula. This is not limited herein. When the user does not feed back the second score K1, the score K1 is the first score K1. The first score K1 is determined based on an evaluation parameter L1, and the evaluation parameter L1 includes duration L1, a quantity of posture change times L1, and a physiological parameter L1. The duration L1 is a time length when the seat parameter of the seat used by the user is a seat parameter P1, the quantity of posture change times L1 is a quantity of posture change times of the user within the duration L1, and the physiological parameter L1 is a physiological parameter when the seat parameter of the seat used by the user is the seat parameter P1. The physiological parameter L1 may be, for example, a heartbeat statistical value, a heart rate variability, a breathing statistical value, a body temperature statistical value, a quantity of blinking times, or the like when the seat parameter of the seat used by the user is the seat parameter P1. It may be understood that, for example, when the electronic apparatus receives, for the first time, the instruction of exiting the first state by the user, the seat parameter P1 may be the preset seat parameter. In this case, the duration L1 is a time length when the seat parameter of the seat used by the user is the preset seat parameter, the quantity of posture change times L1 is a quantity of posture change times of the user within the duration L1, and the physiological parameter L1 is a physiological parameter when the seat parameter of the seat used by the user is the preset seat parameter.

Further, each time before the electronic apparatus receives the instruction of exiting the first state by the user, if the seat parameter obtaining apparatus detects that the seat parameter changes, that is, the seat parameter obtaining apparatus feeds back the changed seat parameter to the electronic apparatus, each time before the electronic apparatus receives the instruction of exiting the first state by the user, each time when the seat parameter obtaining apparatus detects that the seat parameter changes, the electronic apparatus obtains, by using the evaluation module, a first score before the seat parameter changes and a first score after the seat parameter changes, and the electronic apparatus obtains the changed seat parameter by using the seat parameter obtaining apparatus. That is, the electronic apparatus obtains at least one seat parameter and at least one first score, where the at least one seat parameter is in a one-to-one correspondence with the at least one first score. Any one of the at least one first score K2 is determined based on an evaluation parameter L2. The evaluation parameter L2 includes duration L2, a quantity of posture change times L2, and a physiological parameter L2. The duration L2 is a time length when the seat parameter of the seat used by the user is a seat parameter corresponding to the first score K2, the quantity of posture change times L2 is a quantity of posture change times of the user within the duration L2, and the physiological parameter L2 is a physiological parameter when the seat parameter of the seat used by the user is the seat parameter corresponding to the first score K2. The physiological parameter L2 may be, for example, a heartbeat statistical value, a heart rate variability, a breathing statistical value, a body temperature statistical value, a quantity of blinking times, or the like when the seat parameter of the seat used by the user is the seat parameter corresponding to the first score K2. Further, the electronic apparatus may determine, from the at least one seat parameter based on the at least one first score, a seat parameter corresponding to a first score K3 with the highest score. In addition, each time when the electronic apparatus receives the instruction of exiting the first state by the user, if the user has fed back the second score K2, the electronic apparatus may obtain the second score K2 by using the evaluation module. In addition, the electronic apparatus may determine, based on the first score K3 and the second score K2, a score K2 corresponding to the user. It may be understood that the score K2 may be a sum of the first score K3 and the second score K2, may be an average of the first score K3 and the second score K2, may be a higher score in the first score K3 and the second score K2, or may be a score obtained through weighting of the first score K3 and the second score K2 based on the preset weighting formula. This is not limited herein. If the user does not feed back the second score K2, the score K2 corresponding to the user is the first score K3.

In conclusion, the electronic apparatus may further use the user information, the status information, the score, and the seat parameter that are obtained each time as information associated with a sample point. For example, the electronic apparatus may use the user information, the status information, the score K1, and the seat parameter P1 as information associated with a sample point. The electronic apparatus may also use the user information, the status information, the score K2, and the seat parameter corresponding to the first score K3 as information associated with a sample point. Further, the electronic apparatus may further cluster, by using a learning module through a clustering model, information associated with sample points, and determine, by using a similarity between the status information, a category to which the sample points belong. It may be understood that, in this application, when clustering, by using the learning module through the clustering model, the information associated with the sample points, the electronic apparatus may determine, by using a similarity between at least one type of information included in the status information, the category to which the sample points belong. For example, when the status information includes the environment information, the category to which the sample points belong may be determined by using a similarity between the environment information. When the status information includes the environment information and the time information, the category to which the sample points belong may be determined by using the similarity between the environment information and a similarity between the time information.

It should be noted that before the electronic apparatus obtains, from the database based on the user information, the historical data belonging to the different categories, the electronic apparatus has completed clustering. Therefore, the electronic apparatus may locally obtain the N pieces of historical data based on the user information and the status information.

It can be learned that in the foregoing technical solution, the historical data belonging to the different categories is obtained based on the user information. In addition, because the categories are determined based on the similarity between the historical status information included in the historical data, the N pieces of historical data belonging to the same category are determined from the historical data corresponding to the user based on the status information of the user, that is, historical data corresponding to a similar historical status of the user is determined based on the status information of the user.

303: The electronic apparatus adjusts the seat based on the seat parameter corresponding to the user.

The electronic apparatus may adjust the seat based on the seat parameter corresponding to the user by using the seat adjustment apparatus.

It can be learned that in the foregoing technical solution, the corresponding seat parameter is configured for the user based on the user information and the status information corresponding to the user. This meets differentiated user requirements, avoids seat adjustment based on a fixed parameter preset by a manufacturer in advance, and provides a more flexible seat adjustment manner for the user, thereby better improving user experience.

Optionally, in a possible implementation, that the electronic apparatus determines, based on the N pieces of historical data, the seat parameter corresponding to the user includes: The electronic apparatus obtains M pieces of historical data from the N pieces of historical data based on a preset condition, where the preset condition includes one of the following: scores are the highest, the scores are higher than a threshold, or the scores are in descending order, and M is an integer greater than 0 and less than N; and the electronic apparatus determines, based on M historical seat parameters corresponding to the M pieces of historical data, the seat parameter corresponding to the user.

M may be, for example, a value such as 1, 2, 3, 4, 5, 6, 10, or 12.

The electronic apparatus obtains the M pieces of historical data from the N pieces of historical data based on the preset condition. That is, the electronic apparatus may obtain, from the N pieces of historical data, the M pieces of historical data with the highest scores; the electronic apparatus may obtain, from the N pieces of historical data, the M pieces of historical data whose scores are higher than the threshold; or the electronic apparatus may obtain first M pieces of historical data from the N pieces of historical data in descending order of scores.

In addition, when M is 1, the seat parameter corresponding to the user is a seat parameter corresponding to historical data with the highest score. When M is an integer greater than 1, the seat parameter corresponding to the user may be an average value of the M historical seat parameters, or may be a median of the M historical seat parameters. This is not limited in this application.

For example, the M historical seat parameters include a historical seat parameter A, a historical seat parameter B, and a historical seat parameter C. The historical seat parameter A includes a seat back angle A, a seat height A, a seat front-back position A, and a seat temperature A. The historical seat parameter B includes a seat back angle B, a seat height B, a seat front-back position B, and a seat temperature B. The historical seat parameter C includes a seat back angle C, a seat height C, a seat front-back position C, and a seat temperature C. The seat parameter corresponding to the user includes a back angle of the seat corresponding to the user, a seat height corresponding to the user, a seat front-back position corresponding to the user, and a seat temperature corresponding to the user. It may be understood that the seat back angle corresponding to the user may be an average value of the seat back angle A, the seat back angle B, and the seat back angle C, or may be a median of the seat back angle A, the seat back angle B, and the seat back angle C. The seat height corresponding to the user may be an average value of the seat height A, the seat height B, and the seat height C, or may be a median of the seat height A, the seat height B, and the seat height C. The seat front-back position corresponding to the user may be an average value of the seat front-back position A, the seat front-back position B, and the seat front-back position C, or may be a median of the seat front-back position A, the seat front-back position B, and the seat front-back position C. The seat temperature corresponding to the user may be an average value of the seat temperature A, the seat temperature B, and the seat temperature C, or may be a median of the seat temperature A, the seat temperature B, and the seat temperature C.

It can be learned that in the foregoing technical solution, the seat parameter corresponding to the user is determined based on the score, and a requirement of the user can be better controlled, so that the seat parameter that meets the requirement of the user can be provided for the user.

Further, before the electronic apparatus obtains the M pieces of historical data from the N pieces of historical data based on the preset condition, the method further includes: The electronic apparatus determines, based on a difference between the historical time information corresponding to each of the N pieces of historical data and the time information, N weights corresponding to the N pieces of historical data, where a smaller difference indicates a larger weight. The electronic apparatus determines N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A. The electronic apparatus updates the N scoring coefficients to the N historical scores, where the N scoring coefficients are in a one-to-one correspondence with the N historical scores.

It may be understood that, for example, the electronic apparatus may update the scoring coefficient A to the historical score corresponding to the scoring coefficient A.

Further, for example, the N pieces of historical data include historical data 1, historical data 2, and historical data 3. Historical time information corresponding to the historical data 1 is 10:30 on April 12, 2020, historical time information corresponding to the historical data 2 is 14:30 on April 13, 2020, and historical time information 1 corresponding to the historical data 3 is 16:30 on April 14, 2020. If the time information is 9:30 on April 15, 2020, it can be learned that a difference between the historical time information corresponding to the historical data 1 and the time information is the largest, and a difference between the historical time information corresponding to the historical data 3 and the time information is the smallest. Therefore, a weight corresponding to the historical data 1 is the smallest, and a weight corresponding to the historical data 3 is the largest.

It can be learned that in the foregoing technical solution, a different weight is assigned to each historical score by using the difference between the historical time information and the time information, and different scoring coefficients are determined based on the weights and the historical scores. This implements selection of historical data based on the scoring coefficients, and avoids a case in which a recommended seat parameter cannot meet a user requirement when a seat parameter preferred by the user changes within a relatively long time span.

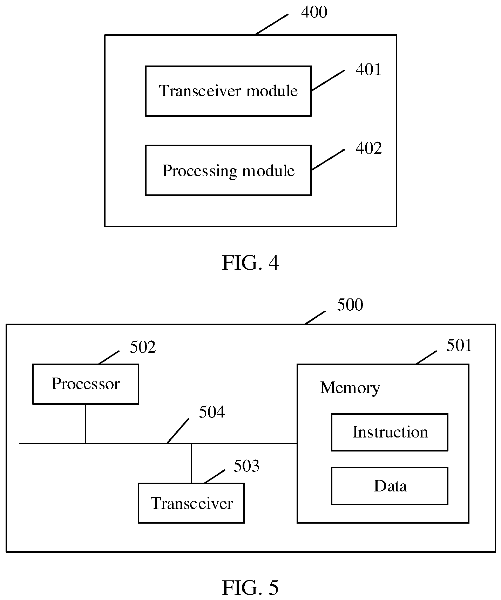

FIG. 4 is a schematic diagram of a structure of a seat adjustment apparatus according to an embodiment of this application. The seat adjustment apparatus 400 includes a transceiver module 401 and a processing module 402. The transceiver module 401 is configured to obtain user information and status information corresponding to a user. The processing module 402 is configured to determine, based on the user information and the status information, a seat parameter corresponding to the user. The processing module 402 is further configured to adjust a seat based on the seat parameter corresponding to the user.

For the status information, refer to the status information in step 301 in FIG. 3. Details are not described herein again. For the seat parameter corresponding to the user, refer to the seat parameter corresponding to the user in step 303 in FIG. 3. Details are not described herein again.

It can be learned that in the foregoing technical solution, the corresponding seat parameter is configured for the user based on the user information and the status information corresponding to the user. This meets differentiated user requirements, avoids seat adjustment based on a fixed parameter preset by a manufacturer in advance, and provides a more flexible seat adjustment manner for the user, thereby better improving user experience.

In a possible implementation, when obtaining the user information corresponding to the user, the processing module 402 is configured to: identify identity information of the user by using a camera, or identify the identity information entered by the user; and obtain the user information based on the identity information.

For the identity information, refer to the identity information in step 301 in FIG. 3. Details are not described herein again.

It can be learned that in the foregoing technical solution, the user information is obtained.

In a possible implementation, when determining, based on the user information and the status information, the seat parameter corresponding to the user, the transceiver module 401 is configured to send the user information and the status information to a cloud server, and receive the seat parameter corresponding to the user and sent by the cloud server; or the processing module 402 is configured to: obtain N pieces of historical data based on the user information and the status information, where N is an integer greater than 0; and determine, based on the N pieces of historical data, the seat parameter corresponding to the user.

For the seat parameter corresponding to the user, refer to the seat parameter in step 302 in FIG. 3. Details are not described herein again. For the historical data, refer to the historical data in step 302 in FIG. 3. Details are not described herein again.

It can be learned that in the foregoing technical solution, the cloud server determines the seat parameter based on the user information and the status information. The historical data is determined based on the user information and the status information, and therefore the seat parameter is determined based on the historical data.

In a possible implementation, that the N pieces of historical data are obtained based on the user information and the status information includes: The transceiver module 401 is configured to send the user information and the status information to the cloud server; and receive the N pieces of historical data sent by the cloud server.

It can be learned that in the foregoing technical solution, the cloud server determines the historical data based on the user information and the status information. This prepares for subsequently determining the seat parameter based on the historical data.

Optionally, in a possible implementation, when obtaining the N pieces of historical data based on the user information and the status information, the processing module 402 is specifically configured to: obtain, from a database based on the user information, historical data belonging to different categories, where the historical data includes historical status information, and the categories are determined based on a similarity between the historical status information; and determine, from the historical data based on the status information, the N pieces of historical data belonging to a same category.

For the historical status information, refer to the historical status information in step 302 in FIG. 3. Details are not described herein again.

It can be learned that in the foregoing technical solution, the historical data belonging to the different categories is obtained based on the user information. In addition, because the categories are determined based on the similarity between the historical status information included in the historical data, the N pieces of historical data belonging to the same category are determined from the historical data corresponding to the user based on the status information of the user, that is, historical data corresponding to a similar historical status of the user is determined based on the status information of the user.

In a possible implementation, each of the N pieces of historical data includes a historical score and a historical seat parameter, and when determining, based on the N pieces of historical data, the seat parameter corresponding to the user, the processing module 402 is specifically configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

For content of obtaining the M pieces of historical data from the N pieces of historical data based on the preset condition, refer to step 303 in FIG. 3. Details are not described herein again.

It can be learned that in the foregoing technical solution, the seat parameter corresponding to the user is determined based on the score, and a requirement of the user can be better controlled, so that the seat parameter that meets the requirement of the user can be provided for the user.

Optionally, in a possible implementation, each of the N pieces of historical data further includes historical status information, and the historical status information includes historical time information. Before obtaining the M pieces of historical data from the N pieces of historical data based on the preset condition, the processing module 402 is specifically configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

It can be learned that in the foregoing technical solution, a different weight is assigned to each historical score by using the difference between the historical time information and the time information, and different scoring coefficients are determined based on the weights and the historical scores. This implements selection of historical data based on the scoring coefficients, and avoids a case in which a recommended seat parameter cannot meet a user requirement when a seat parameter preferred by the user changes within a relatively long time span.

An embodiment of this application provides a seat adjustment system. The system includes a processor, a memory, and a seat adjustment apparatus. The processor is configured to: obtain, from the memory, user information and status information corresponding to a user; and determine, based on the user information and the status information, a seat parameter corresponding to the user. The seat adjustment apparatus is configured to adjust a seat based on the seat parameter corresponding to the user.

For the seat parameter corresponding to the user, refer to the seat parameter in step 302 in FIG. 3. Details are not described herein again. For historical data, refer to the historical data in step 302 in FIG. 3. Details are not described herein again.

It can be learned that in the foregoing technical solution, a cloud server determines the seat parameter based on the user information and the status information. The historical data is determined based on the user information and the status information, and therefore the seat parameter is determined based on the historical data.

In a possible implementation, the system further includes an identity identifying apparatus. When obtaining, from the memory, the user information and the status information corresponding to the user, the identity identifying apparatus is configured to identify identity information of the user by using a camera, or identify the identity information entered by the user; and the processor is configured to obtain the user information based on the identity information.

For the identity information, refer to the identity information in step 301 in FIG. 3. Details are not described herein again.

It can be learned that in the foregoing technical solution, the user information is obtained.

In a possible implementation, the system further includes a communication apparatus, and when determining, based on the user information and the status information, the seat parameter corresponding to the user,
the processor is configured to send the user information and the status information to the cloud server by using the communication apparatus; and receive, by using the communication apparatus, the seat parameter corresponding to the user and sent by the cloud server; or
the processor is configured to: obtain N pieces of historical data from the memory based on the user information and the status information, where N is an integer greater than 0; and determine, based on the N pieces of historical data, the seat parameter corresponding to the user.

The communication apparatus may be, for example, a vehicle-mounted t-box (telematics box).

For the seat parameter corresponding to the user, refer to the seat parameter in step 302 in FIG. 3. Details are not described herein again. For the historical data, refer to the historical data in step 302 in FIG. 3. Details are not described herein again.

It can be learned that in the foregoing technical solution, the cloud server determines the seat parameter based on the user information and the status information. The historical data is determined based on the user information and the status information, and therefore the seat parameter is determined based on the historical data.

In a possible implementation, when obtaining the N pieces of historical data based on the user information and the status information,
the processor is configured to: send the user information and the status information to the cloud server by using the communication apparatus; and receive the N pieces of historical data sent by the cloud server.

It can be learned that in the foregoing technical solution, the cloud server determines the historical data based on the user information and the status information. This prepares for subsequently determining the seat parameter based on the historical data.

In a possible implementation, when obtaining the N pieces of historical data based on the user information and the status information,
the processor is configured to: obtain, from the memory based on the user information, historical data belonging to different categories, where the historical data includes historical status information, and the categories are determined based on a similarity between the historical status information; and determine, from the historical data based on the status information, the N pieces of historical data belonging to a same category.

For the historical status information, refer to the historical status information in step 302 in FIG. 3. Details are not described herein again.

It can be learned that in the foregoing technical solution, the historical data belonging to the different categories is obtained based on the user information. In addition, because the categories are determined based on the similarity between the historical status information included in the historical data, the N pieces of historical data belonging to the same category are determined from the historical data corresponding to the user based on the status information of the user, that is, historical data corresponding to a similar historical status of the user is determined based on the status information of the user.

In a possible implementation, each of the N pieces of historical data includes a historical score and a historical seat parameter, and when determining, based on the N pieces of historical data, the seat parameter corresponding to the user,
the processor is configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

For content of obtaining the M pieces of historical data from the N pieces of historical data based on the preset condition, refer to step 303 in FIG. 3. Details are not described herein again.

It can be learned that in the foregoing technical solution, the seat parameter corresponding to the user is determined based on the score, and a requirement of the user can be better controlled, so that the seat parameter that meets the requirement of the user can be provided for the user.

In a possible implementation, each of the N pieces of historical data further includes historical status information, and the historical status information includes historical time information. Before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

It can be learned that in the foregoing technical solution, a different weight is assigned to each historical score by using the difference between the historical time information and the time information, and different scoring coefficients are determined based on the weights and the historical scores. This implements selection of historical data based on the scoring coefficients, and avoids a case in which a recommended seat parameter cannot meet a user requirement when a seat parameter preferred by the user changes within a relatively long time span.

An embodiment of this application further provides a seat adjustment system. The system includes a vehicle, and the vehicle includes a processor, a memory, a communication apparatus, and a seat adjustment apparatus.

The processor is configured to: obtain, from the memory, user information and status information corresponding to a user; and determine, based on the user information and the status information, a seat parameter corresponding to the user.

The seat adjustment apparatus is configured to adjust a seat based on the seat parameter corresponding to the user.

For the status information, refer to the status information in step 301 in FIG. 3. Details are not described herein again. For the seat parameter corresponding to the user, refer to the seat parameter corresponding to the user in step 303 in FIG. 3. Details are not described herein again.

The communication apparatus may be, for example, a vehicle-mounted t-box (telematics box).

It can be learned that in the foregoing technical solution, the corresponding seat parameter is configured for the user based on the user information and the status information corresponding to the user. This meets differentiated user requirements, avoids seat adjustment based on a fixed parameter preset by a manufacturer in advance, and provides a more flexible seat adjustment manner for the user, thereby better improving user experience.

In a possible implementation, the vehicle further includes an identity identifying apparatus, and when obtaining, from the memory, the user information and the status information corresponding to the user,
the identity identifying apparatus is configured to identify identity information of the user by using a camera, or identify the identity information entered by the user; and
the processor is configured to obtain the user information based on the identity information.

For the identity information, refer to the identity information in step 301 in FIG. 3. Details are not described herein again.

It can be learned that in the foregoing technical solution, the user information is obtained.

In a possible implementation, the system further includes a cloud server, and the vehicle further includes a communication apparatus. When determining, based on the user information and the status information, the seat parameter corresponding to the user,
the processor is configured to send the user information and the status information to the cloud server by using the communication apparatus; and the cloud server is configured to: determine, based on the user information and the status information, the seat parameter corresponding to the user; and send the seat parameter corresponding to the user to the communication apparatus; or
the processor is configured to: obtain N pieces of historical data from the memory based on the user information and the status information, where N is an integer greater than 0; and determine, based on the N pieces of historical data, the seat parameter corresponding to the user.

For the seat parameter corresponding to the user, refer to the seat parameter in step 302 in FIG. 3. Details are not described herein again. For the historical data, refer to the historical data in step 302 in FIG. 3. Details are not described herein again.

It can be learned that in the foregoing technical solution, the cloud server determines the seat parameter based on the user information and the status information. The historical data is determined based on the user information and the status information, and therefore the seat parameter is determined based on the historical data.

In a possible implementation, when obtaining the N pieces of historical data based on the user information and the status information,
the cloud server is configured to receive the user information and the status information that are sent by the communication apparatus; and
the processor is configured to receive, by using the communication apparatus, the N pieces of historical data sent by the cloud server.

It can be learned that in the foregoing technical solution, the cloud server determines the historical data based on the user information and the status information. This prepares for subsequently determining the seat parameter based on the historical data.

In a possible implementation, when obtaining the N pieces of historical data based on the user information and the status information,
the processor is configured to: obtain, from the memory based on the user information, historical data belonging to different categories, where the historical data includes historical status information, and the categories are determined based on a similarity between the historical status information; and determine, from the historical data based on the status information, the N pieces of historical data belonging to a same category.

For the historical status information, refer to the historical status information in step 302 in FIG. 3. Details are not described herein again.

It can be learned that in the foregoing technical solution, the historical data belonging to the different categories is obtained based on the user information. In addition, because the categories are determined based on the similarity between the historical status information included in the historical data, the N pieces of historical data belonging to the same category are determined from the historical data corresponding to the user based on the status information of the user, that is, historical data corresponding to a similar historical status of the user is determined based on the status information of the user.

In a possible implementation, each of the N pieces of historical data includes a historical score and a historical seat parameter, and when determining, based on the N pieces of historical data, the seat parameter corresponding to the user,
the processor is configured to: obtain M pieces of historical data from the N pieces of historical data based on a preset condition, where the preset condition includes one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

For content of obtaining the M pieces of historical data from the N pieces of historical data based on the preset condition, refer to step 303 in FIG. 3. Details are not described herein again.

It can be learned that in the foregoing technical solution, the seat parameter corresponding to the user is determined based on the score, and a requirement of the user can be better controlled, so that the seat parameter that meets the requirement of the user can be provided for the user.

In a possible implementation, each of the N pieces of historical data further includes historical status information, and the historical status information includes historical time information. Before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, where a smaller difference indicates a larger weight; determine N scoring coefficients based on the N weights and N historical scores corresponding to the N pieces of historical data, where any scoring coefficient A of the N scoring coefficients is determined based on a weight corresponding to the scoring coefficient A and a historical score corresponding to the scoring coefficient A; and update the N scoring coefficients to the N historical scores, where the N scoring coefficients are in a one-to-one correspondence with the N historical scores.

It can be learned that in the foregoing technical solution, a different weight is assigned to each historical score by using the difference between the historical time information and the time information, and different scoring coefficients are determined based on the weights and the historical scores. This implements selection of historical data based on the scoring coefficients, and avoids a case in which a recommended seat parameter cannot meet a user requirement when a seat parameter preferred by the user changes within a relatively long time span.

FIG. 5 is a schematic diagram of a structure of an electronic apparatus according to an embodiment of this application. The electronic apparatus 500 may include a memory 501, a processor 502, and a transceiver 503, which are connected through a bus 504. The memory 501 is configured to store related instructions and data, and may transmit the stored data to the processor 502.

The memory 501 may include a volatile memory (volatile memory), for example, a random access memory (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

The processor 502 may be a central processing unit (central processing unit, CPU), a microprocessor, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

In addition, the memory 501 may be a physically independent unit, or may be integrated with the processor 502.

Further, the processor 502 may execute the related instructions stored in the memory 501, to perform the method in the embodiment in FIG. 3.

An embodiment of this application further provides a vehicle-mounted device. The vehicle-mounted device includes the electronic apparatus in the embodiment in FIG. 4.

An embodiment of this application further provides a computer-readable storage medium. The computer-readable storage medium stores a computer program. When the computer program is executed, any method in the embodiment in FIG. 3 is implemented.

An embodiment of this application further provides a computer program product, including computer instructions. When the computer instructions are run on the electronic apparatus in the embodiment in FIG. 4, the electronic apparatus is enabled to perform any method in the embodiment in FIG. 3.

The foregoing units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application. In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a cloud server, a network device, or the like) to perform all or some of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A seat adjustment method, comprising:
obtaining user information and status information corresponding to a user;
determining, based on the user information and the status information, a seat parameter corresponding to the user; and
adjusting a seat based on the seat parameter corresponding to the user.

2. The method according to claim 1, wherein the obtaining user information corresponding to a user comprises:
identifying identity information of the user by using a camera, or identifying the identity information entered by the user; and
obtaining the user information based on the identity information.

3. The method according to claim 1, wherein the status information comprises at least one of the following:
environment information, time information, or geographical location information, and the environment information comprises environment information inside a vehicle and/or environment information outside the vehicle.

4. The method according to any one of claims 1 to 3, wherein the determining, based on the user information and the status information, a seat parameter corresponding to the user comprises:
sending the user information and the status information to a cloud server; and receiving the seat parameter corresponding to the user and sent by the cloud server; or
obtaining N pieces of historical data based on the user information and the status information, wherein N is an integer greater than 0; and determining, based on the N pieces of historical data, the seat parameter corresponding to the user.

5. The method according to claim 4, wherein the obtaining N pieces of historical data based on the user information and the status information comprises:
sending the user information and the status information to the cloud server; and
receiving the N pieces of historical data sent by the cloud server.

6. The method according to claim 4, wherein the obtaining N pieces of historical data based on the user information and the status information comprises:
obtaining, from a database based on the user information, historical data belonging to different categories, wherein the historical data comprises historical status information, and the categories are determined based on a similarity between the historical status information; and
determining, from the historical data based on the status information, the N pieces of historical data belonging to a same category.

7. The method according to claim 5 or 6, wherein each of the N pieces of historical data comprises a historical score and a historical seat parameter, and the determining, based on the N pieces of historical data, the seat parameter corresponding to the user comprises:
obtaining M pieces of historical data from the N pieces of historical data based on a preset condition, wherein the preset condition comprises one of the following: scores are the highest, the scores are higher than a threshold, or the scores are in descending order, and M is an integer greater than 0 and less than N; and
determining, based on M historical seat parameters corresponding to the M pieces of historical data, the seat parameter corresponding to the user.

8. The method according to claim 7, wherein each of the N pieces of historical data further comprises historical status information, the historical status information comprises historical time information, and before the obtaining M pieces of historical data from the N pieces of historical data based on a preset condition, the method further comprises:
determining, based on a difference between the historical time information corresponding to each of the N pieces of historical data and the time information, N weights corresponding to the N pieces of historical data, wherein a smaller difference indicates a larger weight;
determining N scoring coefficients based on the N weights and N historical scores corresponding to the N pieces of historical data, wherein any scoring coefficient A of the N scoring coefficients is determined based on a weight corresponding to the scoring coefficient A and a historical score corresponding to the scoring coefficient A; and
updating the N scoring coefficients to the N historical scores, wherein the N scoring coefficients are in a one-to-one correspondence with the N historical scores.

9. A seat adjustment system, wherein the system comprises a processor, a memory, and a seat adjustment apparatus, wherein
the processor is configured to: obtain, from the memory, user information and status information corresponding to a user; and determine, based on the user information and the status information, a seat parameter corresponding to the user; and
the seat adjustment apparatus is configured to adjust a seat based on the seat parameter corresponding to the user.

10. The system according to claim 9, wherein the system further comprises an identity identifying apparatus, and when obtaining, from the memory, the user information and the status information corresponding to the user,
the identity identifying apparatus is configured to identify identity information of the user by using a camera, or identify the identity information entered by the user; and
the processor is configured to obtain the user information based on the identity information.

11. The system according to claim 9, wherein the status information comprises at least one of the following: environment information, time information, or geographical location information, and the environment information comprises environment information inside a vehicle and/or environment information outside the vehicle.

12. The system according to any one of claims 9 to 11, wherein the system further comprises a communication apparatus, and when determining, based on the user information and the status information, the seat parameter corresponding to the user,
the processor is configured to send the user information and the status information to a cloud server by using the communication apparatus; and receive, by using the communication apparatus, the seat parameter corresponding to the user and sent by the cloud server; or
the processor is configured to: obtain N pieces of historical data from the memory based on the user information and the status information, wherein N is an integer greater than 0; and determine, based on the N pieces of historical data, the seat parameter corresponding to the user.

13. The system according to claim 12, wherein when obtaining the N pieces of historical data based on the user information and the status information,
the processor is configured to: send the user information and the status information to the cloud server by using the communication apparatus; and receive the N pieces of historical data sent by the cloud server.

14. The system according to claim 12, wherein when obtaining the N pieces of historical data based on the user information and the status information,
the processor is configured to: obtain, from the memory based on the user information, historical data belonging to different categories, wherein the historical data comprises historical status information, and the categories are determined based on a similarity between the historical status information; and determine, from the historical data based on the status information, the N pieces of historical data belonging to a same category.

15. The system according to claim 13 or 14, wherein each of the N pieces of historical data comprises a historical score and a historical seat parameter, and when determining, based on the N pieces of historical data, the seat parameter corresponding to the user,
the processor is configured to: obtain M pieces of historical data from the N pieces of historical data based on a preset condition, wherein the preset condition comprises one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

16. The system according to claim 15, wherein each of the N pieces of historical data further comprises historical status information, the historical status information comprises historical time information, and before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, wherein a smaller difference indicates a larger weight; determine N scoring coefficients based on the N weights and N historical scores corresponding to the N pieces of historical data, wherein any scoring coefficient A of the N scoring coefficients is determined based on a weight corresponding to the scoring coefficient A and a historical score corresponding to the scoring coefficient A; and update the N scoring coefficients to the N historical scores, wherein the N scoring coefficients are in a one-to-one correspondence with the N historical scores.

17. A seat adjustment system, wherein the system comprises a vehicle, and the vehicle comprises a processor, a memory, a communication apparatus, and a seat adjustment apparatus, wherein
the processor is configured to: obtain, from the memory, user information and status information corresponding to a user; and determine, based on the user information and the status information, a seat parameter corresponding to the user; and
the seat adjustment apparatus is configured to adjust a seat based on the seat parameter corresponding to the user.

18. The system according to claim 17, wherein the vehicle further comprises an identity identifying apparatus, and when obtaining, from the memory, the user information and the status information corresponding to the user,
the identity identifying apparatus is configured to identify identity information of the user by using a camera, or identify the identity information entered by the user; and
the processor is configured to obtain the user information based on the identity information.

19. The system according to claim 17, wherein the status information comprises at least one of the following: environment information, time information, or geographical location information, and the environment information comprises environment information inside the vehicle and/or environment information outside the vehicle.

20. The system according to any one of claims 17 to 19, wherein the system further comprises a cloud server, the vehicle further comprises a communication apparatus, and when determining, based on the user information and the status information, the seat parameter corresponding to the user,
the processor is configured to send the user information and the status information to the cloud server by using the communication apparatus; and the cloud server is configured to: determine, based on the user information and the status information, the seat parameter corresponding to the user; and send the seat parameter corresponding to the user to the communication apparatus; or
the processor is configured to: obtain N pieces of historical data from the memory based on the user information and the status information, wherein N is an integer greater than 0; and determine, based on the N pieces of historical data, the seat parameter corresponding to the user.

21. The system according to claim 20, wherein when obtaining the N pieces of historical data based on the user information and the status information,
the cloud server is configured to receive the user information and the status information that are sent by the communication apparatus; and
the processor is configured to receive, by using the communication apparatus, the N pieces of historical data sent by the cloud server.

22. The system according to claim 20, wherein when obtaining the N pieces of historical data based on the user information and the status information,
the processor is configured to: obtain, from the memory based on the user information, historical data belonging to different categories, wherein the historical data comprises historical status information, and the categories are determined based on a similarity between the historical status information; and determine, from the historical data based on the status information, the N pieces of historical data belonging to a same category.

23. The system according to claim 21 or 22, wherein each of the N pieces of historical data comprises a historical score and a historical seat parameter, and when determining, based on the N pieces of historical data, the seat parameter corresponding to the user,
the processor is configured to: obtain M pieces of historical data from the N pieces of historical data based on a preset condition, wherein the preset condition comprises one of the following: scores are the highest, the scores are higher than a threshold, or the scores are in descending order, and M is an integer greater than 0 and less than N; and determine, based on M historical seat parameters corresponding to the M pieces of historical data, the seat parameter corresponding to the user.

24. The system according to claim 23, wherein each of the N pieces of historical data further comprises historical status information, the historical status information comprises historical time information, and before obtaining the M pieces of historical data from the N pieces of historical data based on the preset condition,
the processor is further configured to: determine, based on a difference between the historical time information corresponding to each of the N pieces of historical data and the time information, N weights corresponding to the N pieces of historical data, wherein a smaller difference indicates a larger weight; determine N scoring coefficients based on the N weights and N historical scores corresponding to the N pieces of historical data, wherein any scoring coefficient A of the N scoring coefficients is determined based on a weight corresponding to the scoring coefficient A and a historical score corresponding to the scoring coefficient A; and update the N scoring coefficients to the N historical scores, wherein the N scoring coefficients are in a one-to-one correspondence with the N historical scores.

25. An electronic apparatus, comprising a processor and a memory, wherein the processor is connected to the memory, the memory is configured to store a computer program, and the processor is configured to execute the computer program stored in the memory, to enable the electronic apparatus to perform the method according to any one of claims 1 to 8.

26. A vehicle-mounted device, comprising the electronic apparatus according to claim 25.

27. A computer-readable storage medium, wherein the computer-readable storage medium stores a computer program, and when the computer program is executed, the method according to any one of claims 1 to 8 is implemented.

28. A computer program product comprising computer instructions, wherein when the computer instructions are run on the electronic apparatus according to claim 25, the electronic apparatus is enabled to perform the method according to any one of claims 1 to 8.
